(19) Europäisches Patentamt
European Patent Office
Office européen des brevets

(11) EP 2 452 979 A1

(12) EUROPEAN PATENT APPLICATION

(43) Date of publication:
16.05.2012 Bulletin 2012/20

(51) Int Cl.:
C08L 67/08 (2006.01)  C09J 5/06 (2006.01)
C09J 11/06 (2006.01)  C09J 167/08 (2006.01)
A61F 13/15 (2006.01)  C08L 23/08 (2006.01)

(21) Application number: 10190752.5

(22) Date of filing: 10.11.2010

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: The Procter & Gamble Company
Cincinnati, OH 45202 (US)

(72) Inventors:
• Corzani, Italo
661001 Chieti (IT)

• Lunetto, Pietro
65024 Manoppello Scalo (Pescara) (IT)
• Saiz, Giuseppe
66100 Chieti (IT)

(74) Representative: Briatore, Andrea
Procter & Gamble Italia S.p.A.
Italian Research Center
Via Aterno 128-130
66020 Sambuceto di San Giovanni Teatino
(Chieti) (IT)

(54) **Adhesive and use thereof**

(57)     Disclosed herein is a new use for thermoplastic oil-modified alkyd resins. It has now been found that such resins can be used as the predominant component of a hot melt adhesive which can be employed for instance as a construction adhesive in the manufacture of disposable absorbent articles. The composition also includes a copolymer formed from at least two monomer types of which at least one monomer type is a polar monomer and at least one monomer type is an apolar monomer, and a solid plasticizer.

*FIG. 1*

EP 2 452 979 A1

**Description**

FIELD OF THE INVENTION

The invention generally relates to alkyd resin-containing adhesives and use thereof. More specifically, the disclosure relates to construction adhesives predominantly containing oil-modified alkyd resins, absorbent articles containing these adhesives, and a method of making the articles.

BACKGROUND OF THE INVENTION

Adhesives are commonly used in the manufacture of disposable absorbent articles such as, for example, infant and adult incontinence articles and diapers. These articles are generally manufactured by combining several components and, more specifically, by employing adhesives to form an adhesive bond between different components of the article, thereby joining those components together. The components generally include a liquid-permeable topsheet, a liquid-impermeable backsheet attached to the topsheet, and an absorbent core positioned between the topsheet and the backsheet. Thus, for example, adhesives have been used to bond the topsheet and the backsheet together.. These adhesives are often referred to as construction adhesives because they are used to help construct the absorbent article from its individual components. In many instances, a hot-melt adhesive is used as a construction adhesive. Adhesives also have been used to bond discrete components, such as fasteners and leg elastics or cuffs, to each other or to the article.

"Hot-melt adhesive" refers to a thermoplastic polymer composition that is heated to obtain a liquid of flowable viscosity, and after application to an adherend, cooled to obtain a solid. An adhesive bond is formed when the adhesive solidifies upon cooling to a temperature below its melt temperature or below its solidification transition temperature. Hot-melt adhesives used as construction adhesives in the manufacture of disposable absorbent articles typically include several components. These components include one or more polymers to provide cohesive strength. These polymers make up a significant part of the hot-melt adhesive composition. The composition also includes components such as, for example, a resin or analogous material (sometimes called a tackifier) to provide adhesive strength. The composition also typically includes waxes, plasticizers or other materials to modify viscosity. Still further, the composition can optionally include further additives, such as antioxidants or other stabilizers. A typical hot-melt adhesive composition might contain from about 10 to about 35 weight percent (wt%) cohesive strength polymer(s); from about 30 to about 65 wt% resin or other tackifier(s); from more than zero to about 30 wt% plasticizer or other viscosity modifier; and optionally up to about 10 wt% stabilizer and other additives such as fillers.

While equipment has been designed to supply and apply hot-melt adhesives, and various manufacturing processes have been designed to accommodate and utilize hot-melt adhesives in the manufacture of articles, these adhesives are accompanied by challenges. For example, in the absence of a viscosity modifier, such adhesives typically melt and, therefore, must be applied at a temperature of about 150°C to about 190°C. Materials sensitive to such temperatures cannot be adhered with such adhesives. Disposable absorbent articles typically contain these temperature-sensitive materials. And, in the manufacture of such articles, the manufacturing processes must accommodate adhesives suitable for application to such materials, in addition to the conventional hot-melt adhesive. There would be benefits in reducing the number and types of adhesives used to construct such articles. Furthermore, there would be benefits in providing these processes with an adhesive that need not be heated to the high temperatures required of a conventional hot-melt adhesive.

Particular problems arise in the case of adhesion of components of disposable absorbent articles, because these tend commonly to require bonding of substrates based on polyolefins, such as films, for instance, polyethylene and polypropylene. Especial difficulties arise in finding hot melt adhesives which are capable of generating strong adhesion between such materials. Polyolefins, in particular polyethylene and polypropylene, are extremely difficult to adhere strongly.

At the same time, it is very important to avoid high levels of cold flow. Some thermoplastic materials, even if apparently solid at temperature well below their softening point, can nevertheless continue to slowly flow, like highly viscous fluids. This is a dangerous phenomenon in an adhesive because it continues to migrate over time and after a while the adhesive can be displaced from the point where it was originally applied and where it is needed, to other parts of the article. This may not only be useless but can create new problems. For instance, in any absorbent article an adhesive with a high cold flow may migrate through the components of the article and come into contact with the skin of the user. The quality of low cold flow is sometimes also described as strong internal cohesion.

Due to the low surface tension of polyolefinic substrates, it is common to use for these substrates hot melts based for instance on rather apolar polymers such as styrenic block copolymers, polyolefins or polyolefinic copolymers. However, even in this case it is necessary to corona treat the polyolefin film so as to increase the surface tension of the surface(s) to be adhered. However, not only does this add a further requirement in the processing system but the corona effect is one which decays relatively quickly, so that, although it can mitigate the problem of insufficiently strong adhesion, it cannot deal with it completely and satisfactorily.

Thus, the invention addresses the problem of providing adhesives which are capable not only of strongly adhering difficult-to-adhere substrates such as polyolefins, and which allow a convenient application process, but which can also exhibit very low cold flow after application.

Therefore it is an aim of the invention to provide an adhesive composition which is capable of use as an adhesive in the bonding of substrates, in particular substrates of the types common in disposable absorbent articles, especially polyolefinic substrates, which shows on the one hand adequate adhesive ability; also sufficiently low cold flow; and is capable of application to temperature-sensitive substrates.

Hot melt adhesives including thermoplastic alkyd reins are described in DE 3743424. These are said to give good processability and adhesive performance when formulated with ethylene copolymers. Generally it is taught that additives such as resins, waxes, colourants, fillers and/or stabilisers can be included but the exemplified compositions contain only alkyd resin and ethylene copolymer. The only substrates tested or mentioned for use with these adhesives are wood chips, which are relatively hydrophilic substrates. These adhesives apparently only show low melt viscosity at relatively high melt temperatures (at least 175°C) which makes them unsuitable for application to low melting-point substrates such as polyolefin films. It is also stated that the alkyd resin has softening point above the glass transition temperature of the ethylene copolymer. The ethylene copolymers are said to contain 9 to 24% vinyl acetate (or 5 to 15% acrylic acid). Furthermore, the modifying oils in the alkyd resins are said to be preferably those having 16 to 22 carbon atoms. We find that these longer chain modifying oils tend to lead to lower adhesion, particularly on polyolefins. There is no discussion in this document of the use of solid plasticizers for the purpose of increasing adhesion, in particular on hydrophobic substrates, or for reducing cold flow.

SUMMARY OF THE INVENTION

Disclosed herein is a new use for oil-modified thermoplastic alkyd resins. Such resins can be used as the predominant component of a construction adhesive or another adhesive for use in absorbent articles, such as an elastic adhesive or a stretch side panel adhesive. Accordingly, one aspect of the invention disclosed herein includes such adhesives. And, as explained in more detail below, these adhesives address one or more of the above-described challenges associated with conventional construction adhesives and elastic adhesives. On the basis of this finding, disclosed herein are additional aspects of the invention directed to articles that employ these alkyd resin-containing adhesives, and methods of making the articles.

An adhesive composition of the invention includes

(a) at least about 50 wt% of thermoplastic oil-modified alkyd resin;

(b) a copolymer or blend of copolymers, each copolymer being formed from at least two monomer types of which at least one monomer type is a polar monomer and at least one monomer type is an apolar monomer, in an amount of at least 0.01 wt%, and

(c) at least about 1 wt% of a solid plasticizer or blend of plasticizers,

all percentages being by weight of the adhesive composition.

In a further aspect of the invention the defined adhesive composition is used for bonding to substrates and preferably at least one, more preferably, both substrates are formed of polyolefin. For instance, both substrates may be polyolefin films or one may be a polyolefin film and one may be a polyolefin non-woven. In particular, this use is valuable where the polyolefin is polyethylene or polypropylene. As a result the invention also provides a bonded article comprising first and second components and an adhesive composition applied between and joining said article components, the adhesive being as defined above. This article may be a disposable absorbent product.

An article, for example a disposable absorbent article, according to an aspect of the invention includes disposable absorbent article components, and the inventive adhesive composition applied between and joining at least two of the disposable absorbent article components together. Particular structures of absorbent article are also defined herein.

Thus preferably the article can be a disposable diaper which has a pair of opposing end edges and a pair of longitudinal side edges, the absorbent article comprising a top sheet, a back sheet and an absorbent core disposed between the top sheet and back sheet, the absorbent core comprising particles of superabsorbent polymer, and an adhesive composition according to the invention disposed on a portion of the disposable absorbent article, the adhesive joining at least a first portion of the disposable absorbent article to a second portion of the disposable absorbent article by an adhesive bond.

Another aspect of the invention is a method of forming an adhesive bond between components of an article, such as a disposable absorbent article. The method generally includes applying to a first article component the inventive adhesive composition at a temperature of about 80°C to about 200°C, and joining the first article component with a second article component to form an adhesive bond as the adhesive cools to room temperature.

In one aspect of the invention the adhesive is used in a fastening system in a disposable absorbent article (rather than as a construction adhesive).

Thus the invention also provides an absorbent article comprising an absorbent assembly containing a front waist region and a rear waist region and a crotch region longitudinally between and connecting said front waist region and said rear waist region, the front waist region and the rear waist region having an open configuration and a closed configuration about the waist of a wearer, the article also comprising a pre-engaged, adhesive fastening system comprising an adhesive engaged to an adherent to close the front waist region and the rear waist region in the closed configuration, wherein said adhesive fastening system includes an adhesive composition according to the invention.

Although the articles are not limited to consumer products falling within specific categories, a representative, non-limiting list of such categories includes baby care, feminine protection, incontinence care, paper products, and household care articles. A variety of articles may fall within these categories. Exemplary baby care articles include diapers, wipes, baby bibs, baby change and bed mats. Exemplary feminine protection articles include pads, tampons, interlabial products and pantyliners. Exemplary incontinence care articles include diapers, pads, and liners. Exemplary paper products include toilet tissue, paper towels, and facial tissues. Exemplary household care articles include sweeper products, and floor cleaning articles. As described in further detail below, the articles can include a variety of personal hygiene products such as, for example, absorbent articles including diapers, sanitary napkins, tissues, towels, and wipes, and also non-hygiene products such as, for example, packaging articles and containers.

In one aspect of the invention the adhesive is used in packaging. Thus the invention also provides a container or a packaging article containing an adhesive composition according to the invention, said adhesive composition being disposed on at least one portion or surface of said container or packaging article for joining at least said portion or surface of said container or packaging article to at least a second portion of it, or wherein said adhesive is used for joining auxiliary elements to at least one portion or surface of said container or packaging article.

We find that the choice of a composition containing predominant amounts of oil-modified alkyd resins results in excellent adhesion of low surface tension substrates such as polyolefins. The oil-modified nature of the alkyd resins contributes to their ability to show strong adhesion between low surface tension substrates. However, these modifying oils lead to strong internal plasticization which tends to increase the cold flow properties of the adhesive. Thus, according to the invention the adhesive composition also contains (b) a copolymer or blend of copolymers, formed of at least one apolar monomer type and at least one polar monomer type. The inclusion of these copolymers results in an adhesive having low cold flow but without negatively affecting the adhesion to polyolefin substrates. Particularly preferred copolymers are discussed in more detail below.

We find that the inclusion of component (c), the plasticizer or blend of plasticizers, that is solid at ambient temperature, and preferably has melting point at least about 30°C, in combination with components (a) and (b), enables a composition to be provided which has appropriate melt viscosity at low enough temperatures for application to temperature-sensitive substrates but also has excellent adhesion to these substrates and exhibits very low cold flow. Indeed, we find that the plasticizers used in the invention not only reduce melt viscosity at low temperatures, but they also improve adhesion to low surface tension substrates relative to compositions without component (c), and reduce cold flow relative to compositions without component (c).

This is all achievable at the same time as providing excellent compatibility of the essential components and additional optional components so that de-mixing of the components of the adhesives does not occur. This is valuable both during the storage and application of the adhesives and after they have been applied, in the finished bonded article in which they are used.

In addition, the adhesives according to the invention are of sufficiently low viscosity at low processing temperatures, and therefore can be applied to bond substrates at a lower temperature than can conventional hot melt adhesives. This results in reduced operating costs in that the particular adhesive now need not be heated to the high temperatures required in some of the prior art. At the same time, the processing equipment presently employed to apply conventional hot melt adhesives in article manufacturing processes need not be exchanged for new equipment. This results in no further expenses and capital costs.

Furthermore, the inventive adhesives have a melt viscosity which can be substantially lower than that of conventional hot melt adhesives. This lower melt viscosity translates into increased fluidity at a given temperature and, importantly, at the lower processing temperatures at which the adhesive can be applied relative to conventional hot melt adhesives. This makes application of the adhesive easier in that many more applicators can be considered. Furthermore, the lower melt viscosity also broadens the scope of substrates that can be bonded together with the adhesives. The processing range of the inventive adhesives includes low processing temperatures (relative to conventional hot melt adhesives and other alkyd resin-based compositions as disclosed in DE 3743424) allowing the bonding of low melting point materials such as polyolefins.

The alkyd resin-containing adhesives described herein are advantageous because the surface energy thereof can be low. Generally, an adhesive should have a surface energy no greater than, and preferably matching, that of the substrates sought to be adhered. That relationship ensures strong adhesion (mechanically) between the adhesive and the substrate. The surface energy of conventional construction adhesives, however, is not readily adjustable. Consequently, the scope of substrates that could be adhered by any given construction adhesive was necessarily limited on the basis of the surface energy of the adhesive. The ability to adjust the surface energy of the alkyd resin-containing adhesives disclosed herein to a low value now makes possible the ability to adhere a broader scope of substrates.

Additional features of the invention may become apparent to those skilled in the art from a review of the following detailed description, taken in conjunction with the drawings, the examples, and the appended claims.

BRIEF DESCRIPTION OF THE DRAWING

For a more complete understanding of the disclosure, reference should be made to the following detailed description and accompanying drawing wherein:

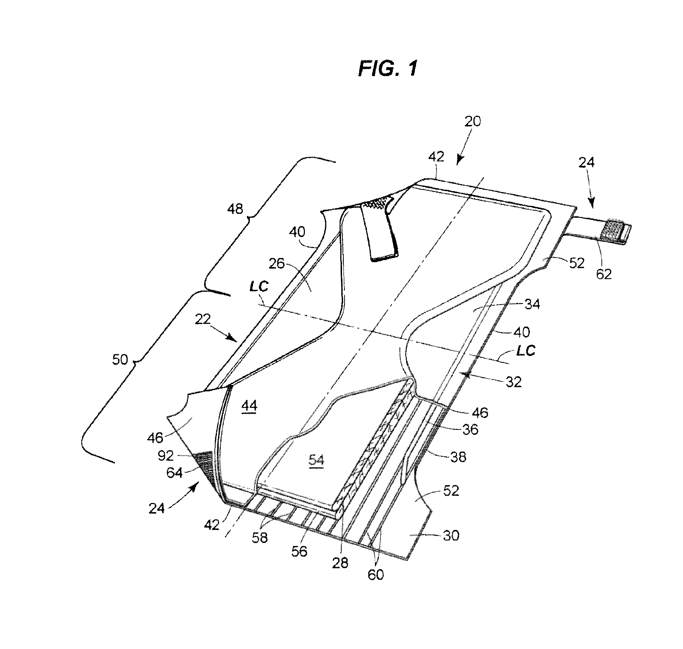

Figure 1 is a partially cut-away perspective view of an embodiment of a disposable absorbent article, specifically a diaper, incorporating an alkyd resin-containing construction adhesive.

While the specification concludes with claims particularly pointing out and distinctly claiming the subject matter that is regarded as the present invention, it is believed that the invention will be more fully understood from the following description taken in conjunction with the accompanying drawing. Parts of the figure may have been simplified by the omission of selected elements for the purpose of more clearly showing other elements. Such omissions of elements are not necessarily indicative of the presence or absence of particular elements in any of the exemplary embodiments, except as may be explicitly delineated in the corresponding written description. The drawing is not necessarily to scale.

DETAILED DESCRIPTION OF THE INVENTION

According to the invention thermoplastic oil-modified alkyd resins can be used as the predominant component of an adhesive, useful as a construction adhesive or another adhesive in the production of absorbent articles (e.g. elastic adhesive, stretch side panel adhesive, fastening adhesive).

Disclosed and explained in further detail herein are these alkyd resin-containing adhesives, uses for these adhesives, articles that include these adhesives, and methods of making the articles. As described in further detail below, the articles can include a variety of personal hygiene products such as, for example, absorbent articles including diapers, sanitary napkins, tissues, towels, and wipes, and also non-hygiene products such as, for example, packaging articles and containers.

Generally, an absorbent article (e.g., a disposable absorbent article) according to an aspect of the invention includes absorbent article components, and an adhesive composition applied between and joining at least two of the adsorbent article components together. As described in further detail below, the adhesive composition includes oil-modified alkyd resin.

Another aspect of the invention is a method of forming an adhesive bond between components of an article, such as a disposable absorbent article. The method generally includes applying to a first article component the adhesive composition that includes oil-modified alkyd resin at a temperature of about 80°C to about 200°C, preferably up to about 150°C, in particular not more than 140°C, and joining the first article component with a second article component to form an adhesive bond as the adhesive cools to room temperature.

"Absorbent article" is used herein to refer generally to a device that absorbs and contains liquid. One class of such articles includes a device that is placed against or in proximity to a device wearer's body to absorb and contain various exudates discharged from the body. That class of absorbent articles includes items such as diapers, pull-on diapers, pant-type garments, training pants, incontinence briefs, incontinence undergarments, absorbent inserts, diaper holders and liners, feminine hygiene garments (e.g., sanitary napkins), and the like. Another class of absorbent articles includes a device that is applied to absorb, contain, or clean various liquids. That class of absorbent articles includes paper-based items such as napkins, tissues (e.g., facial and toilet tissues), towels, and wipes.

"Construction adhesive" is used herein to refer generally to an adhesive used to join one or more major components of an absorbent article to themselves or together during the manufacturing process. The adhesive bond formed by a construction adhesive is typically intended to be a permanent bond.

"Disposable" is used herein to describe absorbent articles that generally are not intended to be laundered or otherwise restored or reused as an absorbent article (i.e., articles intended to be discarded after a single use and, possibly, to be recycled, composted or otherwise discarded in an environmentally compatible manner).

"Pant-type" is used herein to refer to an article configured such that it has a waist opening and a pair of leg openings. A pant may be placed in position on the wearer by inserting the wearer's legs into the leg openings and sliding the pant into position about a wearer's lower torso. This configuration may be permanent as in the case of conventional underwear, or may be temporary as in the case of a training pant with openable seams for removal. Additionally, absorbent articles can be constructed with refastenable features allowing the article to have both a pant-like configuration and one or more configurations which are open or not pant like.

"Longitudinal" is used herein to refer to a direction running perpendicular from a waist edge to an opposing waist edge of the article and generally parallel to the maximum linear dimension of the article. Directions within 45 degrees of the longitudinal direction are considered to be "longitudinal".

"Lateral" is used herein to refer to a direction running from a side edge to an opposing side edge of the article and generally at a right angle to the longitudinal direction. Directions within 45 degrees of the lateral direction are considered to be "lateral".

As used herein, the terms "elastic," "elastomer," "elastomeric," "elastically," and "stretchable" generally refer to materials which are extensible by a pulling force, and which also return to substantially their original dimensions when the external pulling force is removed. More specifically, these terms refer to a material that is able to extend to a strain of at least 50% without breaking or rupturing, and is able to recover substantially to its original dimensions after the deforming force has been removed. It will be appreciated that these terms include the term "extensible" as each term is used herein.

"Garment-facing" is used herein to refer to describe a surface that is in contact with or may be in close proximity to any garment being worn.

"Body-facing" is used herein to refer to describe a surface that is in contact with the body of a wearer or in close proximity (i.e., closer to the body than a garment-facing surface) to the body of the wearer when the article is worn.

As used herein, the term "joined" encompasses configurations whereby an element is directly secured to another element by affixing the element directly to the other element, and configurations whereby an element is indirectly secured to another element by affixing the element to intermediate member(s) which in turn are affixed to the other element.

The term "fixed," as used when referring to elements that are "fixed" to one another, means the elements are ordinarily joined or attached together by the manufacturer of the article in a manner such that the wearer or user of the article will not be able to un-join or detach the elements during the article's ordinary use, and the elements will not become un-joined or detached through the article's ordinary wear and tear. Elements that are "fixed" to one another are not intended to be separated during normal use of the article.

As used herein, the terms "refastenable," "releasably fastenable," and "engageable" refer to attachment of two or more elements or portions of elements together in a manner in which they can be separated and re-attached without substantial degradation of fastener performance or damage to surrounding components of the article which would impair the article's continued use. It will be appreciated that a refastenable, releasably fastenable, or engageable component need not have an infinite life span, but it is sufficient that the components attached in a refastenable, releasably fastenable, or engageable manner can be separated and re-attached successively several times over the typical use life span of the article. It will also be appreciated that the aggressiveness of actual fastening may be reduced significantly from fastening to refastening in absolute terms, but that such reduction is not "substantial degradation" of fastener performance if the resulting refastened strength is sufficient for purposes of ordinarily using the article and fastener.

"Mechanical fastener" is used herein to refer to a fastening system or mechanism relying on physical restraint, magnetic fields, or engagement of portions of the fastener for operation. Examples of mechanical fasteners are hook and loops, hooks and hooks, buttons, snaps, tab and slot, zippers, magnet(s), and tongue and groove fasteners.

"Spiral" is used herein to refer to a shape or pattern that generally resembles a helix as viewed in a two dimensional plane from a direction substantially orthogonal to the helix's axis of rotation. The construction adhesives disclosed herein can be applied via a spiral applicator to adhere components of an absorbent article to one another.

The adhesives of the invention are usually applied as a liquid, preferably of a low viscosity. The liquid form is obtained by heating the adhesive to a point at which flow occurs. In the liquid form, the adhesive is applied to the adherend (s) and wets and flows into the crevices (if any) of the adherend(s). The adhesive then undergoes a phase change to a solid by cooling in order for the joint to acquire the necessary strength to resist shearing forces.

The alkyd resin-containing adhesive includes thermoplastic oil-modified alkyd resin. The alkyd resin component (a) is present in the adhesive composition in an amount of at least about 50 wt% based on the total weight of the adhesive composition, preferably at least about 60 wt%, more preferably at least about 65 wt% based on the total weight of the adhesive composition. Levels of alkyd resin (a) may be up to about 98.99 wt% but preferably are not more than about 90 wt%, more preferably not more than about 80 wt%.

Alkyd resins can be classified either as crosslinkable or non-crosslinkable. These are often also described as reactive/drying or non-reactive/non-drying. Cross linking may take place through reaction through atmospheric oxygen by using drying oils such as linseed oil as the modifying oil or by the inclusion of chemical crosslinkers. In the invention the resins used are generally in the non-reactive/non-drying category. This means that preferably the alkyd resins change their melt viscosity, once aged for 72 hours at the temperature of 130°C, not more than 40%, and preferably not more than 35%.

We find that in the invention it is important to choose only alkyd resins which are thermoplastic. It is also generally valuable to choose alkyd resins which are non-reactive, namely those which show good thermal stability. This means those resins having a variation in melt viscosity when held at 130°C for 72 hours lower than 35% (test method described below).

The alkyd resins used in the invention are thermoplastic. As a result, an adhesive composition containing them as predominant component may be melted to form a flowable material and then re-cooled to form an adhesive bond.

As mentioned above, the alkyd resins used in the adhesives are preferably chosen from those that have a surface energy of not more than about 45 mN/m, preferably not more than about 40 mN/m. Preferably the surface energy of the alkyd resin is not more than about 35 mN/m and more preferably not more than about 33 mN/m. Without wishing to be bound by any particular theory, it is believed that the presence of free acid groups and/or free alcohol groups on the polymeric backbone or chain of the alkyd resin can influence the resin's surface energy. The lower the number of free acid-groups and/or free alcohol-groups, the lower the surface energy. Alkyd resins can be controllably designed by those having skill in the art to have a specified number of free acid-groups and/or free alcohol-groups. For example, one way to reduce the surface energy, is to cap these groups during the resin's manufacture with capping agents known by those having ordinary skill in the art of alkyd resin manufacture. Capping agents generally include monofunctional acids, such as benzoic acid and acetic acid, or monofunctional alcohols.

The capping of these groups is not believed to detrimentally affect other properties of the resin that make the resin suitable for use as a construction adhesive.

The alkyd resins used in the invention are generally solvent-free.

An alkyd resin is the product of a reaction between a polyhydric alcohol and an acid or acid anhydride. The alkyd resins used in the invention are oil-modified alkyd resins. In the art of alkyd resins it is usual to talk of oil-modified alkyd resins even when what is used in the synthesis of a particular alkyd is the blend of fatty acids derived by the hydrolytic treatment of an oil. Thus, herein, oil-modified alkyd resins include those in which the synthesis involves oil, namely glycerol esters of fatty acids, or the fatty acids themselves, or both. The fatty acid that is used to modify the alkyd resin, either by use of the fatty acid itself or its corresponding glycerol ester, may be saturated or unsaturated. Preferably it is derived from plant or vegetable oils. Vegetable oils are most preferred.

"Polyhydric alcohol" refers to an alcohol having two or more alcohol (i.e., hydroxyl) functional groups. Any suitable polyhydric alcohol or combination of polyhydric alcohols may be used in accordance with the invention. Non-limiting examples of suitable polyhydric alcohols include glycerol, glycol, sugar, sugar alcohol, and combinations thereof. Non-limiting examples of glycols include ethylene glycol, propylene glycol, dipropylene glycol, butylene glycol, hexane triol, dimethylol pentane, dimethylol ethane, and the like, polymers thereof, and combinations thereof. Non-limiting examples of sugars include glucose, sucrose, fructose, raffinose, maltodextrose, galactose, xylose, maltose, lactose, mannose, erythrose, pentaerythritol, dipentaerythritol and mixtures thereof. Non-limiting examples of sugar alcohols include erythritol, xylitol, malitol, mannitol, sorbitol, and mixtures thereof. In certain specific embodiments, the polyhydric alcohol includes glycerol, mannitol, sorbitol, and combinations thereof.

Generally, the polyhydric alcohol is substantially compatible with any polymeric components with which it may be intermixed during the production of the alkyd resin. As used herein, "substantially compatible" means that the polyhydric alcohol is capable of forming a visually homogeneous mixture with polymer present in the composition in which it is intermixed when the polyhydric alcohol is heated to a temperature above the softening and/or the melting temperature of the composition.

In the manufacture of suitable alkyd resins, the polyhydric alcohol can be present in a reaction mixture in an amount of, for example, from about 2 wt% to about 70 wt%, from about 5 wt% to about 50 wt%, from about 10 wt.% to 30 wt%, or from about 15 wt% to about 25%.

Suitable acids have at least one functional group selected from the group consisting of carboxylic acid, carboxylic acid anhydride, and combinations thereof. Non-limiting examples of classes of such acids include monoacids, diacids, polyacids (acids having at least three acid groups), polymers comprising at least one acid moiety, co-polymers comprising at least one acid moiety, anhydrides thereof, and mixtures thereof. More specifically, non-limiting examples of such acids include adipic acid, sebatic acid, lauric acid, stearic acid, myristic acid, palmitic acid, oleic acid, linoleic acid, sebacic acid, citric acid, oxalic acid, malonic acid, succinic acid, glutaric acid, maleic acid, fumaric acid, phthalic acid, isophthalic acid, terephthalic acid, acrylic acid, methacrylic acid, itaconic acid, glycidyl methacrylate, and combinations thereof.

Anhydrides of such acids also may be employed within the context of the present invention. Non-limiting examples of acid anhydrides include maleic anhydride, phthalic anhydride, succinic anhydride, and combinations thereof.

Polymers and co-polymers that include at least one acid moiety, and/or their anhydrides, also may be used as the acid moiety. Non-limiting examples of suitable polymers and copolymers include those having monomer units of acrylic acid, methacrylic acid, itaconic acid, glycidyl methacrylate, anhydrides thereof, and combinations thereof.

In the manufacture of suitable alkyd resins" the acid is employed in the reaction mixture in an amount of, for example, from about 0.1 wt% to about 30 wt%, from about 1 wt% to about 20 wt%, or from about 2 wt% to about 12 wt%. In some embodiments, the molar ratio of alcohol functional groups to acidic functional groups in the composition is at least about 1:1, or at least about 4:1. In some embodiments, the molar ratio of alcohol functional groups to acidic groups in the composition is from about 1:1 to about 200: 1, or from about 1:1 to about 50:1.

Suitable oils for modifying the alkyd resin include triglycerides such as, for example, tristearin, triolein, tripalmitin, 1,2-dipalmitoolein, 1,3-dipalmitoolein, 1-palmito-3-stearo-2-olein, 1-palmito-2-stearo-3-olein, 2-palmito-1-stearo-3-olein, trilinolein, 1,2-dipalmitolinolein, 1-palmito-dilinolein, 1-stearo-dilinolein, 1,2-diacetopalmitin, 1,2-distearo-olein, 1,3-distearo-olein, trimyristin, trilaurin and combinations thereof.

Suitable triglycerides should be added to the reaction mixture from which the alkyd resin is formed. Additionally, or alternatively, oils and/or processed oils containing suitable triglycerides can be added to that mixture. Non-limiting examples of oils include beef tallow, castor oil, coconut oil, coconut seed oil, corn germ oil, cottonseed oil, fish oil, linseed oil, olive oil, oiticica oil, palm kernel oil, palm oil, palm seed oil, peanut oil, rapeseed oil, safflower oil, soybean oil, sperm oil, sunflowerseed oil, tall oil, tung oil, whale oil, and mixtures thereof. Unsaturated and saturated fatty acids may be suitable. Non-limiting examples of such fatty acids include capric acid, caproic acid, caprylic acid, lauric acid, lauroleic acid, linoleic acid, linolenic acid, myristic acid, myristoleic acid, oleic acid, palmitic acid, palmitoleic acid, stearic acid, and mixtures thereof. Combinations of the aforementioned oils and fatty acids also can be employed to modify the alkyd resin.

Preferred modifying oils have relatively shorter carbon chain length. Thus, preferred modifying oils have a content of at least about 10 wt% (based on weight of modifying oil/fatty acid used), preferably at least about 40 wt%, more preferably at least about 50wt%, in particular at least about 70 wt% fatty acids or glycerides whose carbon chain length is not more than C16, preferably not more than C14. Preferably the modifying oil has a high content (in particular at least about 50 wt%, especially at least about 70wt%) lauric acid C12. Coconut oil is particularly preferred.

In the oil modified alkyd resins used in the invention the level of modifying glycerol ester or fatty acid can range from about 0.1 wt% to about 70 wt%. However, it is preferred to use medium-oil alkyd resins in which the content of triglyceride/fatty acid is at least 40wt% and not more than 60 wt% of the reaction mixture, or long-oil alkyds in which the content of triglyceride fatty acid is more than 60 wt% of the reaction mixture, for the purpose of improving the adhesion of low surface tension substrates such as polyolefins. Such alkyd resins have sufficiently high tack and hydrophobicity qualities to give good adhesion on polyolefins and other low surface tension substrates. The improved hydrophobicity of the alkyd resin is believed to contribute to the ability of the adhesive to withstand degradation by water.

In some embodiments, combinations of acid and triglyceride are present in the reaction mixture for the manufacture of the alkyd resin, in total amounts in the ranges given above for levels of triglyceride/fatty acid.

The aforementioned additional components of the oil-modified alkyd resin can be combined in any manner known by those having ordinary skill in the art. For example, these additional components can be combined with the reaction mixture that forms the alkyd resin by mixing the same at a temperature of about 200° C to about 250° C for a time period sufficient to form the alkyd resin.

Some commercially available alkyd resins, although by no means all, meet all of these characteristics and it is important to choose one or more alkyd resins which meet the essential and, desirably, the preferred characteristics discussed herein.

Examples of suitable alkyd resins are those commercially available from Reichhold Co. Durham (NC) under the trade name EM.

A further essential component of the adhesive compositions of the invention is (b) a copolymer or blend of copolymers. Each copolymer contains at least one polar monomer type and at least one apolar monomer type. The polar monomer type is compatible with the polar parts of the alkyd resin molecule and the apolar monomer type is compatible with the polyolefin substrate.

Preferably, the apolar monomer is an olefin monomer. Particularly preferred is ethylene. The ethylene content is preferably not more than about 90 wt% based on total monomer, more preferably not more than about 85 wt% and most preferably not more than about 75 wt%. Levels above these tend to reduce compatibility with the alkyd resin.

Preferably the ethylene content is at least about 10wt% based on total comonomer content, more preferably at least about 15wt% and in particular at least about 20wt%. Levels below these tend to result in insufficient adhesion on polyolefin substrates.

The polar comonomer can for instance be selected from vinyl acetate, methyl acrylate, ethyl acrylate, propyl acrylate, butyl acrylate, hexyl acrylate, ethyl hexyl acrylate, glycidyl acrylate, glycidyl methacrylate, acrylic acid, methacrylic acid, maleic acid, and maleic anhydride, and mixtures of these. We find that these particular monomers when used as polar comononer are particularly useful in that they give an appropriate degree of polarity to the copolymer that it is sufficiently polar to be compatible with the alkyd resin but is not so polar that it reduces the adhesion of the final composition on hydrophobic substrates such as polyolefin.

The content of polar comonomer, especially when it is vinyl acetate, is preferably at least 28 wt%, more preferably at least 40 wt% and in particular at least 50 wt% based on total comonomer content.

The copolymer component (b) is present in the adhesive composition in an amount of at least about 0.01 wt% based on total adhesive formulation. Preferably it is at least about 1 wt%, more preferably at least about 5 wt%. Generally the amount is not more than about 49 wt%, more preferably up to about 40 wt%, especially up to about 30wt%. Even amounts of not more than about 20 wt% can be effective.

We find that the inclusion of the defined copolymers not only increases the adhesion of an adhesive relative to one based only on the alkyd resin but has the capability of substantially decreasing or even completely stopping the cold flow.

The rheological behaviour of such copolymers contributes to this. The value of Tan delta (ratio G"/G', where G" is the viscous or loss modulus and G' is the elastic modulus) of the copolymer is preferably significantly below 1.

Preferably also the softening point of the alkyd resin is below the glass transition temperature of the copolymer (b).

An additional essential component for use in the present invention is one or more compatible solid plasticizer (s) that are not chemically linked inside the alkyd resin(s) molecule (free plasticizers) in addition to the chemically bound internal plasticizers (oils), already used for the chemical modification of the base alkyd(s). The solid plasticizer component (c) is compatible with the formulation, namely it is miscible and mutually soluble with the other components of the formulation so that they do not separate spontaneously.

The presence of these plasticizers generally enhances the adhesion of the blend of the two base components, alkyd resin (a) and copolymer (b). However, to retain the low cold-flow of the final formulation, these plasticizers are solid at room temperature (25°C) and preferably are solid at the intended temperature of use for hygienic absorbent articles, i.e. at 37 °C.

The plasticizer or blend of plasticizers useful in the present invention is solid at room temperature. It is preferable that the melting point of the used plasticizer or blend (measured e.g. by DSC) is not lower than about 30 °C, preferably not lower than about 37 °C and more preferably not lower than about 45 °C. More than one type of plasticizer can be used. When component (c) is a blend then it is the blend of plasticizers that should be solid at room temperature. Thus the blend may contain plasticizer materials that are liquid at room temperature provided that the overall blend of plasticizer is solid at room temperature.

The solid plasticizer or blend of plasticizers preferably comprises solid fully hydrogenated vegetable oils. Such materials are especially advantageous because, while they substantially contribute to reduce cold flow, they also further improve the adhesion of the final formulation on polyolefin films, due to their strong apolar character.

In a preferred embodiment these solid fully hydrogenated vegetable oils are blends of glyceryl esters of fatty acids with a carbon chain length from C8 to C30 and a very low residual unsaturation as expressed by a iodine value lower than 50, a characteristic that increases both their apolar character as well as their stability upon thermal aging.

These solid fully hydrogenated glyceril esters may be mixed, in the final plasticizer used in the present invention, with free fatty acids, both solid and liquid at room temperature with a carbon chain length from C8 to C30 as well as with non-hydrogenated or partially hydrogenated vegetable oils and waxes, provided that the overall used plasticizer, deriving from these blends, has a melting point that is higher than room temperature, preferably higher than about 30 °C, preferably higher than about 37 °C and more preferably higher than about 45 °C.

The solid plasticizer component (c) is preferably present in the final formulation at a level between about 1 wt% and about 49.99 wt%, preferably between about 3 wt% and about 35 wt% and more preferably between about 5 wt% and about 30 wt%.

It can be desirable that up to 50 wt%, preferably up to 35 wt%, of the used solid plasticizer component is made of a wax that has a high melting point, in particular above the typical melting point range of hydrogenated vegetable oils. Such high melting point waxes are particularly effective in reducing cold flow of the composition as a whole, without reducing the adhesion properties of the composition. High melting point resins that have been found particularly useful have melting points not lower than 80°C, preferably not lower than 100°C and more preferably not lower than 130°C.

Non limiting examples of such high melting point waxes are solid sulfonamides, such as para-toluene-sulfonamide; low molecular weight aromatic resins such as the ones available from the Eastman Co. under the trade names Kristalex, Endex, Piccolastic and Piccotex; solid sucrose esters such as sucrose benzoate and sucrose octa-acetate; and camphor.

The addition of a solid plasticizer with a particularly high softening point not only further prevents any cold-flow, but even further increases the softening temperature of the adhesive, as measured e.g. by the temperature of crossing of the two moduli G' and G", the so-called Rheological Softening Temperature or Tx. Most alkyd resins have very low Tx, while for the adhesive compositions of the invention it is preferred that the Tx of the adhesive is preferably not lower than 45 °C .

The adhesives of the present invention may comprise up to about 10 wt.%, preferably up to about 5 wt.%, of a compatibilizer or a blend of compatibilizers. Although generally the compatibility among the basic essential components (a), (b) or (c) may be excellent and does not cause any substantial detrimental phase separation of the single components in the final adhesive even upon prolonged aging (24 hours and more) in the molten state at the preferred processing temperature of 130°C , in some cases the addition of limited amounts of said compatibilizers may be advisable because they increase even further the ageing stability of the formulation and better homogenize the adhesive.

In particular it has been found that suitable compatibilizers for the present invention are non-polymeric and polymeric compounds that have in their molecule or in their polymeric chain at least one chemical group or one monomer that has a very high polar character, so as to be highly compatible with the alkyd resin (a); and at least another chemical group or monomer that is compatible with one of the comonomers that form the copolymer (b). Moreover, it has been found that particularly effective compatibilizers are those compounds whose non-polymeric molecule or whose polymeric chain comprise at least one strongly hydrophilic group or monomer, e.g. methyl vinyl ether, ethyl vinyl ether, pyrrolidone, ethylene oxide, vinylpyrrolidone, vinyl alcohol linked with other chemical groups that are compatible with the apolar part (especially ethylene) or with the polar part of the above described copolymers (b).

Examples of such compatibilizers, that comprise strongly hydrophilic groups or monomers, are, among non-polymeric substances, N-alkyl-pyrrolidones, and polyethoxylates such as polyethoxylated vegetable oils; while, among polymeric materials, non-limiting examples of suitable compatibilizers are ethylene-vinyl alcohol copolymers, methyl-vinyl ether maleic anhydride (or maleic acid) copolymers, isobutylene-maleic anhydride (or maleic acid) copolymers, alkylated poly-vinyl-pyrrolidones, acrylic ester-vinylpyrrolidone copolymers, acrylic acid-vinylpyrrolidone copolymers, vinyl acetate-vinyl pyrrolidone copolymers, styrenemaleic anhydride (or maleic acid) copolymers, styrene-oxazoline copolymers, and styrene-ethylene oxide copolymers.

Tackifiers are normally considered essential components of most hot melt adhesives. Often they are the major component of the hot melt adhesive, even 50% or more of the whole composition. In the present invention it has surprisingly been found that the mentioned copolymers (b), once blended with the mentioned oil-modified alkyds, do not necessarily need the use of tackifiers in order to form hot melt adhesives with high adhesion on polyolefins. Therefore in the formulations of the present invention, the level of tackifiers may be substantially zero. This gives also substantial economic advantages because most often tackifiers are the most expensive components of a hot melt adhesive. Therefore in one embodiment, the adhesives of the present invention do not contain tackifiers.

It has been however found that, in some cases, the addition of suitable tackifiers, may be useful to even further enhance the good performance of the adhesives of the present invention. Particularly good and compatible tackifiers for this use, alone or as a blend, are for example aromatic tackifiers, terpene tackifiers, rosins and rosin ester tackifiers. Their content in the final formulations of the present invention can usefully go from zero up to about 40 wt%, preferably up to about 30 wt% and more preferably up to about 20 wt%.

The adhesive compositions may include one or more additional components, as may be desired for the processing and/or end use of the composition, though these components are not always required. Additional components may be present in any suitable amount. In some embodiments, additional components may be present in an amount of from about 0.01 wt% to about 35 wt% or from about 0.1 wt% to about 20 wt%, or from about 0.1 wt% to about 10 wt%, based on the total weight of the adhesive composition. Non-limiting examples of additional components include, but are not limited to, additional polymers, processing aids, and the like.

Other polymers have been found to have sufficient compatibility with the hot melt adhesives of the present invention, so that, even if added in minor amounts, they effectively contribute to the enhancement both of the adhesive and cohesive properties of the adhesives. As non limiting examples of polymers useful for this can be mentioned styrenic block copolymers, such as SIS, SBS, SEBS, SEPS; thermoplastic polyurethanes such as those available from the Lubrizol Corporation under the trade mark Estane; ether-ester block copolymers such as those available from Du Pont Co. under the trade mark Hytrel; ether-ester-amide and ether-amide block copolymers such as those available from Arkema Co, under the trade mark Pebax; sulfonated polyesters such as those available from the Eastman Co. under the trade name AQ; thermoplastic cellulose esters such as the cellulose acetate propionates and cellulose acetate butyrates available from the Eastman Co. under the trade codes CAP and CAB. Their amount in the final composition is usually not greater than 20 wt%, preferably not greater than 10 wt%, more preferably not greater than 5 wt%.

The adhesive compositions may also include oil gelling agents; antioxidants and stabilizers; mineral fillers; pigments and dyes; perfumes; surfactants. Each of these additives may be present in amounts up to about 10 wt%.

Examples of oil gelling agents include low molecular weight polyamides such as those available from the Henkel corporation under the trademark Versamid; polyoxy aluminium salts of fatty acids C12 to C22, such as those available from the Fed Chem Company under the trade name Manalox; metal salts of fatty acids C12-C22, preferably metal palmitates and metal stearates. Magnesium stearate is particularly preferred. Oil gelling agents act as effective stabilisers for the composition and alleviate any problems of oil leaching.

Examples of mineral fillers include silica, calcium carbonate, calcium sulphate, zeolites, clays and zinc oxide.

The addition of mineral fillers is one known method of attempting to reduce cold flow. However, inclusion of these materials in large quantities (for instance above about 4 or 5 wt%) has the disadvantage of impairing the processability and tack properties. One advantage of the use of the copolymers (b) is that mineral fillers are not required to be added in large quantities for the purpose of decreasing cold flow.

The alkyd resins used in the adhesive composition impart the adhesive with thermal stability sufficient for the applications in which the adhesive is herein contemplated. The temperature range in which the adhesive can be expected to be applied ranges from about 80°C to about 200°C. For example, in specific applications, the preferred adhesive application temperature for polyethylene is in the range from about 90° C to about 150°C, and for polypropylene it is about 120°C to about 150°C. In particular the target application temperature is in the range about 120°C to about 140°C, especially about 130°C. Within that range, the alkyd resins contemplated for use in the construction adhesive herein are expected to maintain their chemical composition (e.g., no pertinent reaction or degradation) and physical properties, such as rheological properties (e.g., substantially constant viscosity).

The hot melt adhesive compositions of the present invention preferably possess also the following chemical-physical and performance characteristics:

A peel strength on polyethylene film that is not lower that 1.0 N/inch, preferably not lower than 1.5 N/inch and more preferably not lower than 2.0 N/inch. This is tested as follows: The hot melt adhesive under test is melt extruded at 130°C , on a corona treated 20 micron thickness polyethylene film (surface tension = 38 mN/m) such as available from RKW AG. (Germany). The extruded adhesive coating is a one inch wide stripe, with a basis weight of 27 g / m$^2$. Immediately after the extrusion, the adhesive coated film is combined with a polypropylene spunbonded non-woven, with a basis weight of 10 g/m$^2$, such as available from Fiberweb Corovin GmbH (Germany). The laminate sample (polyethylene film/adhesive/polypropylene non-woven) is conditioned for 24 hours at 23°C and 50% R.H., and then tested for its peel strength according to the method ASTM D 1876-01, at a debonding speed of 300 mm/ minute.

A cold-flow index that is not greater than 50 %, preferably not greater than 20 % and more preferably not greater than 15 %. This is tested as follows. The adhesive is molten at a temperature of 150°C and carefully poured inside an internally empty mold made of polytetrafluoroethylene and that has an internal hollow shaped as a sphere having a diameter of 50 mm. The adhesive is allowed to cool down and to completely solidify, by keeping the filled mold for 24 hours at the temperature of 23°C . The mold is then opened and the sphere of the adhesive - having a diameter of 50 mm is extracted. The sphere is then put on a glass plate, in an atmosphere kept at 37°C and 50 % R.H. After 24 hours in these conditions, the maximum thickness / height over the glass surface, of the mass of the adhesive material is measured and its value, expressed in millimeters, is recorded as the parameter **H1**. The Cold Flow Index Value after 24 hours at 37°C , is then calculated according to the following equation:

$$CFI = ( 1 - H1 / 50 ) * 100$$

A rheological softening temperature Tx that is not lower than 25°C , preferably not lower than 37°C and more preferably not lower than 45°C . This is measured by using a Rheometer type SR 5000, available from Rheometrics Scientific, Piscataway, NJ (USA).

Boundary conditions of testing are:

- parallel plates with 25 mm diameter
- frequency = 1 Hz

A Tan delta at 37°C that is not greater than 1.1, preferably not greater than 1.0 and more preferably not greater than 0.8. This is measured by using a Rheometer type SR 5000, available from Rheometrics Scientific, Piscataway, NJ (USA).

Boundary conditions of testing are:

- parallel plates with 25 mm diameter
- frequency = 1 Hz

A surface tension that is not greater than 45 mN/m, preferably not greater than 40 mN/m, preferably not greater than 35 mN/m and more preferably not greater than 33 mN/m. This is measured as follows: A film of the adhesive under test is extruded and coated from the melt over a Polypropylene backsheet. The adhesive film is 30 microns thick and one inch wide. After the extrusion, the film is allowed to cool down and conditioned keeping it for 24 hours at 23°C and 50 % R.H. Then the Surface Tension of the adhesive film is measured according to ASTM D2578-09, using the standard liquids required by that. These are available for instance from Ferranini & Benelli Co., (Italy).

A melt viscosity at 130°C that is not greater than 20,000 mPa.s, preferably not greater than 15,000 mPa.s and more preferably not greater than 10,000 mPa.s. This is tested according to ASTM D3268-88.

A variation of the melt viscosity at 130°C , after 72 hours in the molten state at said temperature, that is not greater than 40 % and preferably not greater than 35 %. This is measured according to ASTM D3268-88.

A wet peel strength (after immersion in water for 24 hours, at 23°C ), that is not lower than 1.0 N/inch, preferably not lower than 1.2 N/inch, more preferably not lower than 1.5 N/inch. This is tested as follows. The sample under test, made as described above in connection with the peel strength test method, is completely immersed in distilled water for 24 hours at 23°C. Then the sample is taken out of the water, dried from the excess of water with a blotting paper and immediately tested for peel strength according to the method and conditions specified above.

Although the application of the present invention is not limited to consumer products or articles falling within specific categories, a representative, non-limiting list of such categories includes baby care, feminine protection, incontinence care, paper products, and household care articles. A variety of product forms may fall within each of these categories. Exemplary baby care articles include diapers, wipes, baby bibs, baby change and bed mats. Exemplary feminine protection articles include pads, tampons, interlabial products, and pantyliners. Exemplary incontinence care articles include diapers, pads, and liners. Exemplary paper products include toilet tissues, paper towels, and facial tissues. Exemplary household care articles include sweeper products, and floor cleaning products.

The adhesive comparisons of the invention can be used as construction adhesives in hygienic absorbent articles, especially diapers.

The construction adhesive can be applied using a wide variety of known application methods including but not limited to slot extrusion, sprays, including spiral sprays, and beads. Specific examples include but are not limited to:

- application of the construction adhesive in a spiral spray or slot coating to join a topsheet to an underlying nonwoven layer;
- application of the construction adhesive via slot coating to join an acquisition layer or a distribution layer to a core cover;
- application of beads of the construction adhesive located between the nonwoven material comprising the cuff and the backsheet;
- application of the construction adhesive in a spiral spray or slot coating to join the topsheet to the backsheet so as to seal the longitudinal edges of the absorbent article;
- application of the construction adhesive using slot coating to join a landing zone (i. e. a receiving member) to the backsheet;
- application of the construction adhesive using slot coating to join the core cover to the dusting layer;
- application of the construction adhesive in a spiral spray to join the core to the backsheet.
- application of the construction adhesive in a spiral spray to join the nonwoven material comprising the cuff to the nonwoven material comprising the backsheet.

The adhesives of the invention may be used for bonding substrates, especially when at least one of the substrates is formed of polyolefin, especially polyolefin films such as polyolefin or polypropylene.

In methods of bonding substrates, the adhesive composition is dispensed onto a first substrate at a temperature of from about 80°C to about 200°C and the first substrate is then joined to a second substrate to form an adhesive bond between the substrates as the adhesive cools to room temperature.

Preferably one or both substrates are formed of polyolefin, especially polyolefin films. In particular one or both substrates are formed of polyolefin or polypropylene.

The application temperature is preferably not more than 180°C , in particular not more than 150°C , especially not more than 140°C. It is often at least 110°C, in particular at least about 120°C. Application temperature of around 130°C is generally preferred.

The adhesive composition of the invention can be used in bonding substrates to form absorbent articles, in particular diapers. Accordingly, one aspect of the invention includes:

a disposable absorbent article, having a pair of opposing end edges and a pair of longitudinal side edges, the absorbent article comprising:

(a) a top sheet, a back sheet, and absorbent core disposed between the top sheet and back sheet, the absorbent core comprising particles of super absorbent polymer,
(b) an adhesive as defined above disposed on a portion of the disposable absorbent article, the adhesive joining at least a first portion of the disposable absorbent article to a second portion of the disposable absorbent article by an adhesive bond.

Preferably the adhesive bond has a shear hang time of at greater than about 40 seconds as measured according to the sheer hang time test described in US 2008/0228158. Preferably the adhesive bond has peel strength not lower than 1 N/inch as measured according to the peel strength test (in this case with the two substrates which are bonded).

Preferably the adhesive is applied on the disposable absorbent article by using a spiral spray method and is disposed in a spiral pattern. Preferably the spiral pattern adhesive has a frequency from 1 to 10 spirals per 2.54 cm.

In particular the adhesive may join at least a portion of the top sheet, which is formed of a non-woven to at least a portion of the back sheet, which is a film, to form an end flap seal.

In preferred embodiments the adhesive is applied to the disposable absorbent article using a slot extrusion method. The adhesive may be applied in the form of beads.

The adhesive composition of the invention may also be useful in the fastening systems for absorbent articles. Accordingly, the invention also includes an absorbent article comprising:

(i) an absorbent assembly, comprising a front waist region, and a crotch region longitudinally between and connecting said front and said rear waist regions, the front waist region and the rear waist region having an open configuration and the closed configuration about the waist of a wearer;

(ii) a pre-engaged adhesive fastening system comprising an adhesive inherent engaged to an adherent to close the front waist region and the rear waist region in the closed configuration; wherein the adhesive fastening system includes an adhesive composition of the invention.

Furthermore, the adhesives of the invention are also useful in packaging, especially in the case where the packaging materials to be adhered comprise polyolefin materials such as polyethylene and/or polypropylene. However, they are also useful in packaging where the materials to be adhered are non-polyolefin materials.

The invention also provides a container or a packaging article, for instance a bottle, a case, a box, a tray, a pouch, a bag, containing to the adhesive of the present invention, where said adhesive is disposed on at least one portion or surface of said container or packaging article for joining at least said portion or surface of said container or packaging article to at least a second portion of it or is used for joining to at least one portion or surface of such container or packaging article, auxiliary elements such as labels, caps, handles, secondary containers and the like. Said container, packaging article or auxiliary elements may be made of paper, of cardboard, of plastics, of glass, of metal, of wood, of plywood, of cloth or of nonwoven fabric.

Referring now to Figure 1 this is a partially cut-away perspective view of a disposable absorbent article (e.g., a diaper) 20 prior to its being placed on the diaper wearer (e.g., an infant) by the diaper user (e.g., a parent). As shown in Figure 1, the article 20 includes a body portion 22 and a fastening system 24, which is described in more detail below. The body portion 22 includes a liquid pervious topsheet 26, an absorbent core 28, a liquid impervious backsheet 30, and leg cuffs 32 that include a side flap 34. In one embodiment, the leg cuffs 32 are elastically contractible and, therefore, include one or more elastic members 36. The topsheet 26, the absorbent core 28, the backsheet 30, the side flaps 34, and the elastic members 36 may be assembled in a variety of well known disposable diaper configurations, such as, for example, those shown and described in Buell U.S. Pat. No. 3,860,003.

Figure 1 shows an embodiment of the body portion 22 in which the topsheet 26 and the backsheet 30 are coextensive and have length and width dimensions generally larger than those of the absorbent core 28. The topsheet 26 is superposed on the backsheet 30 thereby forming a periphery 38 of the body portion 22. The periphery 38 defines the outer perimeter or, in other words, the outer extent of the body portion 22. The periphery 38 includes longitudinal edges 40 and end edges 42.

The body portion 22 has an inside surface 44 and an outside surface 46. In general, the outside surface 46 of the article 20 extends from one end edge 42 to the other end edge 42 of the diaper 20 and from one longitudinal edge 40 to the other longitudinal edge 40 of the diaper 20 and is the surface farthest from the wearer during use of the article 20. When a backsheet 30 is used, it typically forms the outside surface 46 of the body portion 22. The inside surface 44 is that surface of the article 20 opposite the outside surface 46 and, in the embodiment shown in Figure 1, is typically formed by the topsheet 26. In general, the inside surface 44 of the article 20 is that surface coextensive with the outside surface 46, and which is for the greater part in contact with the wearer when the article 20 is worn. The inside surface 44 also is often referred to as the "body-facing" surface of the article 20, while the outside surface 46 is often referred to as the "garment-facing" surface.

The article 20 has first and second end regions 48 and 50, respectively, extending from the end edges 42 of the diaper periphery 38 toward the lateral centerline (denoted "LC" in Figure 1) of the article 20. Both the first end region 48 and the second end region 50 extend a distance of about one-half of the length of the article 20 such that the end regions comprise each half of the article 20.

Both the first end region 48 and the second end region 50 have panels 52. The panels 52, also referred to herein as ear tabs, are those portions of the first end region 48 and the second end region 50 that overlap with one another when the article 20 is fastened about the waist of the wearer. The extent to which the end regions 48 and 50 overlap and, thus, the extent to which the panels 52 are formed will depend on the overall dimensions and shape of the article 20 and the size of the article wearer.

The absorbent core 28 of the body portion 22 may be any material that is generally compressible, conformable, non-irritating to the wearer's skin, and capable of absorbing and retaining liquids and certain body exudates, such as urine or other fluids and fecal matter, discharged by an incontinent wearer of the article. The absorbent core **28** may be manufactured in a wide variety of sizes and shapes (e.g., rectangular, hourglass, T-shaped, asymmetric, etc.) and from a wide variety of liquid absorbent materials commonly used in disposable diapers and other disposable absorbent articles, such as comminuted wood pulp, generally referred to as airfelt, and comminuted and airlaid wood pulp, commonly referred to as absorbent fluff. Examples of other suitable absorbent materials include creped cellulose wadding, meltblown polymers, chemically-stiffened, modified, or cross-linked cellulosic fibers, tissue, absorbent foams including those prepared from polymerization of a high internal phase emulsion, absorbent sponges, superabsorbent polymers, absorbent gelling materials, or any other known absorbent materials or combination of materials. The total absorbent capacity of the absorbent core **28** should, however, be compatible with the design exudate loading in the intended use of the diaper **20.** Further, the size and absorbent capacity of the absorbent core **28** may be varied to accommodate wearers ranging from infants to adults.

While the absorbent core **28** may include a single layer of absorbent material such as the configuration described in Weisman et al. U.S. Pat. No. 4,610,678, in one embodiment, the absorbent core **28** is a dual-layered absorbent core in a configuration such as is generally described in Weisman et al. U.S. Pat. No. 4,673,402, having an asymmetric-shaped upper layer **54** and a lower layer **56**. According to one embodiment, the upper layer **54** acts as a liquid acquisition/distribution layer primarily constructed of hydrophilic fiber material. The lower layer **56** acts as a fluid storage layer containing a mixture of hydrophilic fiber material and particles of an absorbent gelling material (hydrogel material). Both the upper layer **54** and the lower layer **56** include an absorbent layer encased in a tissue layer. The size, shape, configuration, and total absorbent capacity of the upper layer **54** or the lower layer **56** may be varied to accommodate wearer's ranging from infants through adults. Therefore, the dimensions, shape, and configuration of both the upper layer **54** and the lower layer **56** may be varied (e.g., the upper layer **54** or the lower layer **56** may have a varying caliper, a hydrophilic gradient, a rapid acquisition zone or may contain absorbent gelling material).

The absorbent core **28** is superposed on the backsheet **30** and, in one embodiment, is associated thereto by a core attachment means **58,** such as those well known in the art, for example, pressure-sensitive adhesives, hot-melt adhesives or other adhesives, ultrasonic bonding; or heat/pressure sealing. Preferably, however, the core attachment means **58** is the adhesive containing the thermoplastic, oil-modified, alkyd resin, as described herein. The absorbent core **28** may be secured to the backsheet **30** by a uniform continuous layer of adhesive, a patterned layer of adhesive, or any array of separate lines or spots of adhesive. The core attachment means **58** can include an open pattern network of filaments of adhesive as is shown in Minetola et al. U.S. Pat. No. 4,573,986.

The backsheet **30** is impervious to liquids and, in one specific embodiment, is manufactured from a thin plastic film, although other flexible liquid impervious materials also may be used. The backsheet **30** prevents the liquids and exudates absorbed and contained in the absorbent core **28** from soiling garments that might contact the article **20,** such as bed-sheets and undergarments. In one embodiment, the backsheet **30** is a polyolefin (e.g., polyethylene) film having a thickness of from about 0.012 mm (0.5 mil) to about 0.051 mm (2.0 mils), although other flexible, liquid impervious materials may be used. As used herein, the term "flexible" refers to materials that are compliant and that will readily conform to the general shape and contours of the human body. The backsheet **30** may be embossed and/or matte-finished to provide a more cloth-like appearance. Further, the backsheet **30** may permit vapors to escape from the absorbent core **28** while still preventing liquids and exudates from passing through the backsheet **30**. The size of the backsheet **30** generally will be determined by the size of the absorbent core **28** and the exact diaper design selected, for example. In one embodiment, the backsheet **30** has a modified hourglass shape extending beyond the absorbent core a minimum distance of at least about 1.3 cm to about 2.5 cm (about 0.5 to about 1.0 inch) around the entire diaper periphery **38.**

The topsheet **26** of the body portion **22** is compliant, soft feeling, non-irritating (to the wearer's skin) planar material. Further, the topsheet **26** is liquid pervious, permitting liquids to readily penetrate through its thickness, and freely pass through it into the absorbent element. Its hydrophobic nature tends to cause its body-facing surface to be dryer and, therefore, protected from the fluids absorbed within the absorbent element. A suitable topsheet **26** may be manufactured from a wide range of materials such as porous foams, reticulated foams, apertured films, natural fibers (e.g., wood or cotton fibers), synthetic fibers (e.g., polyester or polypropylene fibers) or from a combination of natural and synthetic fibers. In one embodiment, the topsheet **26** is made of a hydrophobic material, such as a hydrophobic nonwoven fabric, to isolate the wearer's skin from liquids retained in the absorbent core **28**. There are a number of manufacturing techniques that may be used to manufacture the topsheet **26**. For example, the topsheet **26** may be woven, nonwoven, spunbonded, carded, hydroformed or the like.

The topsheet **26** and the backsheet **30** are associated together in any suitable manner as is well known in the diaper manufacturing art. As used herein, the term "associated" encompasses configurations whereby the topsheet **26** is directly joined to the backsheet **30** by affixing the topsheet **26** directly to the backsheet **30,** and configurations whereby the topsheet **26** is indirectly joined to the backsheet **30** by affixing the topsheet **26** to intermediate members which in turn are affixed to the backsheet **30**. In one embodiment, the topsheet **26** and the backsheet **30** are joined directly to each other in the diaper periphery **38** by a flap attachment means **60** such as an adhesive (including an adhesive containing a thermoplastic, oil-modified, alkyd resin as described herein) or any other attachment means as is known in the art. In general, the core attachment means **58** that affixes the absorbent core **28** to the backsheet **30** is the same means as the flap attachment means **60** that affixes the topsheet **26** to the backsheet **30.** Thus, for example, a uniform continuous layer of adhesive, a patterned layer of adhesive, an array (e.g., spiral) of separate lines or spots of adhesive, or a network or adhesive filaments such as shown in U.S. Pat. No. 4,573,986 may be used.

Leg cuffs **32,** such as elastically contractible leg cuffs, are positioned adjacent the periphery **38** of the body portion **22,** such as along each longitudinal edge **40,** so that the leg cuffs **32** tend to draw and hold the article **20** against the legs of the wearer. While the leg cuffs **32** may include any of several means as are well known in the diaper art, one specific embodiment of the leg cuff construction includes a side flap **34** and one or more elastic members **36,** as is described in detail in Buell U.S. Pat. No. 3,860,003. Additionally, a method and apparatus suitable for manufacturing a disposable diaper having elastically contractible leg cuffs are described in Buell U.S. Pat. No. 4,081,301, Lawson U.S. Pat. No. 4,695,278, Dragoo U.S. Pat. No. 4,795,454, and Buell U.S. Pat. No. 4,900,317. In another embodiment, the elastically contractible leg cuff **32** includes a side flap **34** and an elastic member **36** including an elastic thread.

The article (diaper) **20** is provided with a fastening system (one embodiment of which is generally designated **24)** for forming a side closure. The fastening system generally includes a fastener **62** and a landing member **64** for receiving the fastener. The diaper **20** is fitted to the wearer and the first end region **48** and the second end region **50** are maintained in an overlapping configuration by the fastening system **24** when the diaper **20** is worn. Embodiments of the fastener **62** are intended to engage the landing member **64** so as to provide a secure side closure for the diaper **20** when worn by the diaper wearer.

The fastener **62** is fixed to the article **20** and is positioned on the outside surface **46** of the body portion **22** in the panels (ear tabs) **52** in the first end region **48,** one adjacent each longitudinal edge **40,** so as to engage the landing member **64** positioned in the second end region **50.** The fastener **62** is fixed to the body portion **22** and, in one embodiment, covers an area about 1 inch wide (i.e., generally perpendicular to longitudinal centerline (designated "LC" in Figure 1)) by about 2.5 inches long (i.e., generally parallel to the longitudinal centerline) at the panels **52** of the body portion **22.** The fastener may generally be considered either as being out-board of the article periphery when the fastener is in a closed position or in-board of the article periphery when in the closed position.

Fastener **62** generally is affixed to the body portion **22** by fastener attachment means capable of providing an adequate bond, such as, for example, heat bonds, pressure bonds, ultrasonic bonds, dynamic mechanical bonds, or any other suitable attachment means or combinations of these attachment means as are known to those of ordinary skill in the art. The fastener attachment means may include any of those adhesives capable of providing an adequate bond with other portions of the diaper. Furthermore, the fastener attachment means can be the adhesive containing the thermoplastic, oil-modified, alkyd resin, as described herein.

Other non-limiting examples of absorbent articles according to the present invention are sanitary napkins designed to receive and contain vaginal discharges, such as menses. Disposable sanitary napkins are designed to be held adjacent to the human body through the agency of a garment, such as an undergarment or a panty or by a specially designed belt. Examples of the kinds of sanitary napkins to which the present invention is readily adapted are shown in U.S. Pat. Nos. 4,687,478 and 4,589,876.

Generally, sanitary napkins include a liquid impervious backsheet, a liquid pervious topsheet, and an absorbent core placed between the backsheet and the topsheet. The backsheet typically includes a thermoplastic polymer composition. The topsheet may include any of the topsheet materials discussed with respect to diapers. Similarly, the absorbent core may include any of the absorbent core materials discussed with respect to diapers. It will be apparent that construction adhesive described herein can be used to adhere various components of the sanitary napkin to one another. On the other hand it will be understood the present invention is not limited to any specific sanitary napkin configuration or structure.

Sanitary paper tissue products are commercially offered in formats tailored for a variety of uses including facial tissues and napkins, toilet tissues and absorbent towels (e.g., paper towels). These products often include two or more plies of tissue, the material for which is selected from conventional tissue or special kinds of tissues, such as so-called "through-air-dried tissue" or "differential-density-tissue." The latter is often made via a patterned paper making belt and through-air-drying technology. Generally, however, these products can be made by any process known in the art, including, for example, a conventional papermaking process and a through-air-drying papermaking process. These products employ conventional adhesives that can now be replaced by an adhesive containing a thermoplastic, oil-modified, alkyd resin, as described herein.

EXAMPLES

The following examples are provided to illustrate the invention, but are not intended to limit the scope thereof.

### Example 1

A hot melt adhesive was prepared by gradually adding the below listed components of the composition to a high shear mixer heated to 160°C and mixing until all components were melted and the molten product was uniform.

The composition was as follows:

| | |
|---|---|
| ■ EM 195090 | 69.0 % by weight |
| ■ Levapren 800 | 15.0 % b.w. |
| ■ LP 400 S | 10.0 % b.w. |
| ■ Palmitic acid | 5.0 % b.w. |
| ■ Ethylene-vinyl alcohol copolymer (44 mole % ethylene) | 0.5 % b.w. |
| ■ Hostanox 245 | 0.5 % b.w. |

where:

- EM 195090 is a thermoplastic, solvent free, oil-modified alkyd resin, reported to contain about 50 % b.w. of coconut oil, available from Reichhold Co, Durham (NC);
- Levapren 800 is an ethylene-vinyl acetate copolymer containing 80 % by weight vinyl acetate and available from Lanxess AG (Germany);
- LP 400 S is a solid fully hydrogenated soybean oil, with a iodine number lower than 0.5, available from Golden Brands Co., Louisville (KY);
- Palmitic acid is a fatty-acid, solid plasticizer available from Sigma Aldrich;
- the ethylene-vinyl alcohol copolymer (44 mole % Ethylene) is a copolymeric compatibiliser available from Sigma Aldrich;
- Hostanox 245 is an antioxidant available from Clariant SE (Germany)

The compounded adhesive showed the following physico-chemical and performance characteristics:

- a Peel Strength, when measured according to the test above, equal to 4.74 N/inch;
- a Cold Flow Index, when measured according to the test above, equal to 7.8 %;
- a Tan Delta at 37°C , equal to 0.35
- a Rheological Softening Point Tx equal to 47°C ;
- a Melt Viscosity at 130°C of 1859 mPa.s;
- a Melt Viscosity at 130°C , after having been aged for 72 hours at the same temperature, equal to 1474 mPa.s ;
- A Peel Strength after immersion in water for 24 hours at 23°C , equal to 2.14 N/inch.

### Comparative Example 1

A pure, thermoplastic, solvent free and oil modified alkyd resin coded EM 194903, reported to contain 40 % by weight coconut oil and available from Reichhold Co, Durham (NC), was used above as an adhesive for a laminate between a polyethylene film and a nonwoven.

Its melt viscosity at 130°C was 1728 mPa.s and after aging at the same temperature for 72 hours, the viscosity was 1380 mPa.s.

However both its adhesion, and cohesion / Cold Flow parameters were fully unacceptable. In fact it showed a Tan Delta at 37°C equal to 3.7; a Rheological Softening Point Tx equal to 19°C and a Cold Flow Index equal to 80 %.

Moreover, the observed Peel Strength was 0.78 N/inch, that further dropped to 0.58 N/inch after immersion in water for 24 hours at 23°C.

It can be seen from these examples that the alkyd resin alone does not have appropriate characteristics for use as a construction adhesive especially for adhering polyolefin substrates. However, when compounded with copolymer (b) and solid plasticizer blend (c) it exhibits appropriate low temperature melt viscosity, stability and adhesion properties to render it suitable for this use.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm".

**Claims**

1. An adhesive composition comprising:

    (a) at least about 50 wt% of an oil-modified thermoplastic alkyd resin;
    (b) a copolymer or blend of copolymers, each copolymer being formed from at least two monomer types of which at least one monomer type is a polar monomer and at least one monomer type is an apolar monomer, in an amount of at least about 0.01 wt%; and
    (c) at least about 1 wt% solid plasticizer or blend of plasticizers.

2. A composition according to claim 1 in which the oil-modified alkyd resin (a) comprises oil in an amount of about 40 wt% to about 60 wt%.

3. A composition according to claim 1 or claim 2 in which component (b) is present in the composition in an amount of about 1 to about 49 wt%, preferably about 1 to about 40 wt%, more preferably about 30 wt%.

4. A composition according to any preceding claim in which the apolar monomer type is an olefin monomer and the polar monomer type is a non-hydrocarbon monomer.

5. A composition according to claim 4 in which the apolar monomer type is ethylene.

6. A composition according to claim 4 or claim 5 in which the polar monomer type is selected from the group consisting of vinyl acetate, methyl acrylate, ethyl acrylate, propyl acrylate, butyl acrylate, hexyl acrylate, ethylhexyl acrylate, glycidyl acrylate, glycidyl methacrylate, acrylic acid, methacrylic acid, maleic acid and maleic anhydride.

7. A composition according to any preceding claim in which the copolymer (b) has a content of apolar monomer in the range 10 to 90 wt%, preferably 15 to 85 wt%, more preferably 20 to 75 wt%.

8. A composition according to any preceding claim in which the said component (c) has a melting point at least about 30° C.

9. A composition according to any preceding claim in which the plasticizer component comprises hydrogenated vegetable oil and preferably comprises a blend of glyceryl esters of fatty acids of carbon chains C8 to C30 and iodine value lower than 50.

10. A composition according to any preceding claim in which the softening point of the alkyd resin (a) is below the glass transition temperature of the copolymer (b).

11. A composition according to any preceding claim additionally comprising (e) at least one oil gelling agent.

12. A composition according to any preceding claim comprising a wax having melting point at least 80°C, preferably para-toluene sulfonamide.

13. Use of an adhesive composition according to any preceding claim for bonding two substrates.

14. Use according to claim 13 in which at least one, preferably both, substrates are formed of polyolefin.

15. Use according to claim 14 in which the substrates are either (i) both polyolefin films, preferably formed of polyethylene or polypropylene, or (ii) one polyolefin film and one polyolefin nonwoven, preferably formed of polyethylene or polypropylene..

16. A method of bonding two substrates, the method comprising:

    (I) dispensing onto a first substrate an adhesive composition according to any of claims 1 to 12 at a temperature of about 80° C to about 200° C, and
    (II) joining the first substrate to a second substrate to form an adhesive bond between the substrates as the adhesive cools to room temperature.

**17.** A bonded article, preferably a disposable absorbent article, comprising:

(i) first and second components; and
(ii) an adhesive composition applied between and joining said article components, the adhesive being according to any of claims 1 to 12.

**18.** An article according to claim 17 which is a disposable diaper and which has a pair of opposing end edges and a pair of longitudinal side edges, the absorbent article comprising:

(a) a top sheet, a back sheet, and an absorbent core disposed between the top sheet and back sheet, the absorbent core comprising particles of super absorbing polymer;
(b) an adhesive composition according to any of claims 1 to 21 disposed on a portion of the disposable absorbent article, the adhesive joining at least a first portion of the disposable absorbent article to a second portion of the disposable absorbent article by an adhesive bond.

**19.** An absorbent article comprising:

(i) an absorbent assembly comprising a front waist region and a rear waist region and a crotch region longitudinally between and connecting said front and said rear waist regions, the front waist region and the rear waist region having an open configuration and a closed configuration about the waist of a wearer;
(ii) a pre-engaged, adhesive fastening system comprising an adhesive engaged to an adherent to close the front waist region and the rear waist region in the closed configuration;
wherein said adhesive fastening system includes an adhesive composition according to any of claims 1 to 12.

**20.** Use of an adhesive composition according to any of claims 1 to 12 in packaging for the adhesion of two packaging materials.

**21.** A container or a packaging article containing an adhesive composition according to any of claims 1 to 12, wherein said adhesive composition is disposed on at least one portion or surface of said container or packaging article for joining at least said portion or surface of said container or packaging article to at least a second portion of it or wherein said adhesive composition is used for joining auxiliary elements to at least one portion or surface of said container or packaging article.

## FIG. 1

**EUROPEAN SEARCH REPORT**

Application Number

EP 10 19 0752

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 330 670 A (GRINDROD PAUL E ET AL) 11 July 1967 (1967-07-11) | 1-8,10, 13,17, 20,21 | INV. C08L67/08 C09J5/06 |
| Y | * column 1, line 14 - line 19 * <br> * column 2, line 15 - line 24 * <br> * column 2, line 62 - line 70 * <br> * column 3, line 5 - line 10 * <br> * column 3, line 15 - line 22 * <br> * column 3, line 23 - line 41; table Composition "B" * <br> * column 4, line 40 - line 43 * <br> * claims 1, 5 * | 1-21 | C09J11/06 C09J167/08 A61F13/15 <br><br> ADD. C08L23/08 |
| X | US 5 120 781 A (JOHNSON JR ROBERT W [US]) 9 June 1992 (1992-06-09) | 1,3-8, 10, 13-15, 17,18 | |
| Y | * column 5, line 3 - line 11 * <br> * column 7, line 18 - line 26 * <br> * column 7, line 45 - column 9, line 2; examples 1, 2, 3 * <br> * claims 1-9, 12, 13 * | 1-21 | |
| X | EP 2 083 058 A1 (MARCUS OIL AND CHEMICAL CORP [US]) 29 July 2009 (2009-07-29) | 1-10,13, 17,20,21 | TECHNICAL FIELDS SEARCHED (IPC) <br><br> C09J C08L |
| Y | * paragraph [0024] - paragraph [0026] * <br> * paragraph [0043] * <br> * paragraph [0050] - paragraph [0054] * <br> * claims 1,2,10,12,13 * | 1-21 | C08K A61F |
| Y | WO 99/13016 A1 (NAT STARCH CHEM INVEST [US]) 18 March 1999 (1999-03-18) <br> * page 2, line 20 - line 28 * <br> * page 3, line 7 - line 19 * <br> * page 9, line 12 - line 14 * <br> * claims 1, 15 * | 1-21 | |

-----

-----

-----

-/--

The present search report has been drawn up for all claims

| Place of search | Date of completion of the search | Examiner |
|---|---|---|
| Munich | 13 April 2011 | Siemsen, Beatrice |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................

& : member of the same patent family, corresponding
    document

EPO FORM 1503 03.82 (P04C01)

Europäisches
Patentamt

European
Patent Office

Office européen
des brevets

**EUROPEAN SEARCH REPORT**

Application Number

EP 10 19 0752

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | DE 37 43 424 A1 (HENKEL KGAA [DE]) 29 June 1989 (1989-06-29) * page 1, line 6 - line 8 * * claims 1, 16, 17 * ----- | 1-21 | |
| | | | **TECHNICAL FIELDS SEARCHED (IPC)** |

The present search report has been drawn up for all claims

| Place of search | Date of completion of the search | Examiner |
|---|---|---|
| Munich | 13 April 2011 | Siemsen, Beatrice |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                                   

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 10 19 0752

This annex lists the patent family members relating to the patent documents cited in the above-mentioned European search report.
The members are as contained in the European Patent Office EDP file on
The European Patent Office is in no way liable for these particulars which are merely given for the purpose of information.

13-04-2011

| Patent document cited in search report | | Publication date | Patent family member(s) | | Publication date |
|---|---|---|---|---|---|
| US 3330670 | A | 11-07-1967 | NONE | | |
| US 5120781 | A | 09-06-1992 | BR | 9205971 A | 27-09-1994 |
| | | | CN | 1069994 A | 17-03-1993 |
| | | | DE | 69220052 D1 | 03-07-1997 |
| | | | DE | 69220052 T2 | 11-09-1997 |
| | | | EP | 0583419 A1 | 23-02-1994 |
| | | | ES | 2101853 T3 | 16-07-1997 |
| | | | FI | 934897 A | 05-11-1993 |
| | | | JP | 2512671 B2 | 03-07-1996 |
| | | | JP | 6501515 T | 17-02-1994 |
| | | | NO | 933988 A | 04-11-1993 |
| | | | PT | 100464 A | 30-09-1993 |
| | | | WO | 9219678 A1 | 12-11-1992 |
| EP 2083058 | A1 | 29-07-2009 | AU | 2003209159 A1 | 22-12-2003 |
| | | | EP | 1511820 A1 | 09-03-2005 |
| | | | WO | 03104348 A1 | 18-12-2003 |
| | | | US | 2003229168 A1 | 11-12-2003 |
| WO 9913016 | A1 | 18-03-1999 | AU | 9303398 A | 29-03-1999 |
| DE 3743424 | A1 | 29-06-1989 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 3743424
- US 20080228158 A
- US 3860003 A
- US 4610678 A, Weisman
- US 4673402 A, Weisman
- US 4573986 A, Minetola
- US 4081301 A, Buell
- US 4695278 A, Lawson
- US 4795454 A, Dragoo
- US 4900317 A, Buell
- US 4687478 A
- US 4589876 A